# FASCICULE DE BREVET EUROPEEN

(11) **EP 2 776 345 B1**
(45) Date de publication et mention de la délivrance du brevet: **19.07.2017**
(21) Numéro de dépôt: 12783218.6
(22) Date de dépôt: 08.11.2012
(51) Int. Cl.: B30B 9/30, B07C 5/34, B65F 1/06, B30B 9/32

(54) **POUBELLE À BOISSONS**
MÜLLEIMER FÜR GETRÄNKE
GARBAGE CAN FOR DRINKS

(30) Priorité: 10.11.2011 FR 1160292
(43) Date de publication de la demande: 17.09.2014
(73) Titulaire: GREEN CREATIVE, 94370 Sucy en Brie (FR)
(72) Inventeur: GOMEZ, Rémi, F-75015 Paris (FR); MEURVILLE, Jean-Marc, F-89100 Sens (FR); CHAMOUX, Jan-François, F-77400 Lagny-sur-Marne (FR); LAURENT, Nicolas, F-51430 Tinqueux (FR)
(74) Mandataire: Lavialle, Bruno François Stéphane
(86) Numéro de dépôt international: PCT/EP2012/072098
(87) Numéro de publication internationale: WO 2013/068440

(56) Documents cités:
- WO-A1-2006/089990
- BE-A3- 1 009 279
- DE-U- 7 305 853
- DE-U1- 8 803 363

## Description

L'invention concerne une poubelle à boissons selon le préambule de la revendication 1.

### ARRIERE PLAN DE L'INVENTION

Les entreprises cherchent à améliorer leur politique environnementale pour répondre aux enjeux écologiques de plus en plus importants. En pratique, compte tenu du coût de plus en plus important du traitement des déchets, il est opportun pour une entreprise de posséder des moyens lui permettant de réaliser à moindre coût un tri sélectif des différents déchets qu'elle génère.

A ce titre, le volume des déchets résultant de la consommation de boissons fournies par des distributeurs automatiques tels que distributeurs de sodas, de café, de thé ou autre s'avère être important, de sorte que le traitement de ces déchets est coûteux tant pour l'entreprise que pour la société.

Il est notamment connu du document WO-A-2006089990 une poubelle à boissons selon le préambule de la revendication 1 comprenant une ouverture d'introduction des déchets et dans lequel un piston vient comprimer le déchet contre une plaque de compression avant de le déposer dans un contenant de collecte déporté latéralement par rapport à l'axe du piston.

### OBJET DE L'INVENTION

Le but de l'invention est de proposer une solution pour remédier à cet inconvénient en proposant une architecture de poubelle simple permettant de trier et de réduire le volume des déchets de ces boissons.

### RESUME DE L'INVENTION

A cet effet, l'invention a pour objet une poubelle à boissons selon la revendication 1.

L'invention concerne également une poubelle ainsi définie, comportant des moyens d'identification du type du récipient traité, plusieurs contenants répartis autour de l'axe de déplacement du piston, un éjecteur apte à pousser un récipient reposant sur le piston sélectivement vers l'un ou l'autre des contenants, et dans lequel l'unité de commande pilote l'éjecteur pour qu'il pousse le récipient vers un contenant choisi sur la base du type de récipient reconnu par les moyens d'identification.

L'invention concerne également une poubelle ainsi définie, dans laquelle les moyens d'identification du type de récipient comportent un capteur des efforts subis par le piston durant sa montée et sa descente, et des moyens d'analyse de l'évolution de ces efforts pour déterminer la hauteur initiale du récipient et/ou son poids initial et/ou sa résistance à la compression et/ou sa hauteur une fois compressé et/ou son poids une fois compressé.

L'invention concerne également une poubelle ainsi définie, dans laquelle l'éjecteur comporte plusieurs palettes orientées sensiblement radialement par rapport à l'axe de déplacement du piston en étant régulièrement réparties autour de cet axe, chaque palette étant montée rotative par l'une de ses extrémités portée par un axe excentré par rapport à l'axe de déplacement du piston et parallèle à cet axe, et une extrémité formant poussoir rapprochée de l'axe de déplacement du piston, les extrémités formant poussoir des différentes palettes étant agencées pour entourer conjointement l'espace situé au dessus du piston en position d'éjection lorsque l'éjecteur est au repos, et dans lequel une éjection d'un récipient selon une direction orthogonale à une palette donnée est obtenue en faisant tourner les deux autres palettes dans un sens qui écarte leurs extrémités de l'axe de coulissement du piston, puis en faisant tourner la palette donnée en sens opposé.

L'invention concerne également une poubelle ainsi définie, comportant trois contenants distincts uniformément répartis autour de l'axe de déplacement du piston, et dans laquelle l'éjecteur comporte trois palettes régulièrement réparties autour de l'axe de déplacement du piston.

L'invention concerne également une poubelle ainsi définie, dans laquelle la plaque de compression comporte à sa face inférieure des picots ou lames coupantes pour percer le récipient lorsqu'il est comprimé contre cette plaque par le piston remontant vers sa position haute.

### BREVE DESCRIPTION DES FIGURES

- La figure 1 est une vue en coupe de la poubelle selon l'invention montrant l'ensemble de ses éléments constitutifs ;
- la figure 2 est une vue en coupe montrant une partie des éléments de la poubelle selon l'invention en phase d'introduction d'un récipient à traiter ;
- la figure 3 est une vue en coupe montrant une partie des éléments de la poubelle selon l'invention lorsque le récipient à traiter a été inséré ;
- la figure 4 est une vue en coupe montrant une partie des éléments de la poubelle selon l'invention en début de compression du récipient à traiter ;
- la figure 5 est une vue en coupe montrant une partie des éléments de la poubelle selon l'invention en fin de compression du récipient à traiter ;
- la figure 6 est une vue en coupe montrant une partie des éléments de la poubelle selon l'invention avant éjection du récipient à traiter ;
- la figure 7 est une vue en coupe montrant une partie des éléments de la poubelle selon l'invention durant l'éjection du récipient à traiter ;
- la figure 8 est une représentation schématique en vue de dessus de l'éjecteur de la poubelle selon l'invention en situation de repos ;
- la figure 9 est une représentation schématique en vue de dessus de l'éjecteur de la poubelle selon l'invention lors de l'éjection d'un récipient à traiter ;
- la figure 10 est une vue en perspective de l'éjecteur de la poubelle selon l'invention au repos ;
- la figure 11 est une vue en perspective de l'éjecteur de la poubelle selon l'invention lors de l'éjection d'un récipient.

### DESCRIPTION DETAILLEE DE L'INVENTION

Selon l'invention, on utilise le poids, la hauteur et la résistance du produit qui est mis dans la poubelle pour déterminer s'il s'agit d'une bouteille en plastique, d'une canette ou boîte en acier ou en aluminium, ou bien d'un gobelet en plastique ou en carton, afin de le trier de manière appropriée. En outre, le poids ainsi que la hauteur et la résistance à la compression peuvent être évalués en mesurant les efforts que subit le piston lors du cycle de traitement du produit.

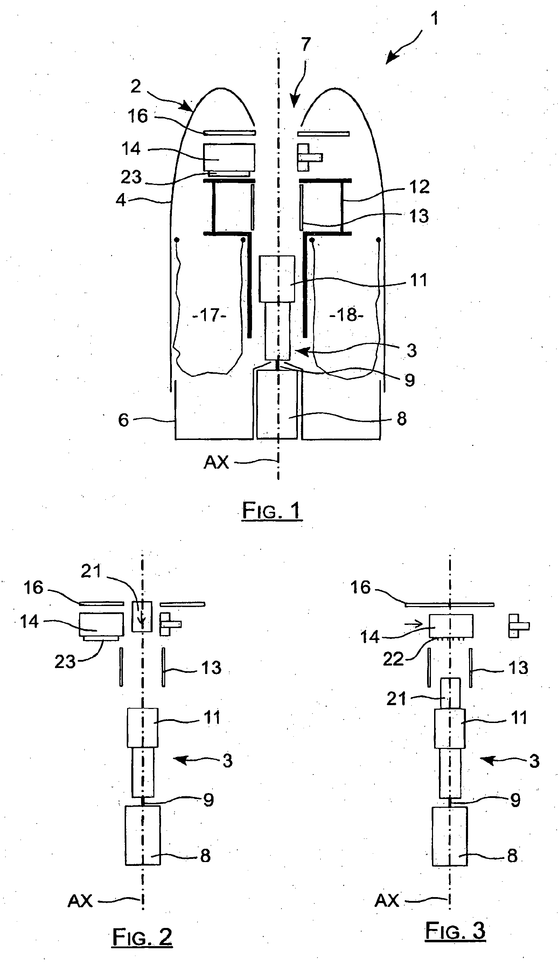

La poubelle selon l'invention qui est repérée par 1 dans la figure 1 a une forme externe de révolution autour d'un axe AX qui est orienté verticalement lorsque cette poubelle est en place, c'est-à-dire en service.

Cette poubelle 1 comporte une enceinte 2 entourant une colonne centrale 3 s'étendant le long de l'axe AX, l'enceinte 2 comprenant une portion supérieure 4 coiffant et s'emboîtant sur une portion inférieure 6 ou embase de la poubelle qui constitue un réceptacle à liquide. La portion supérieure 4 comporte dans la région centrale de sa partie haute une ouverture 7 d'admission des récipients de boissons à traiter.

La colonne centrale 3 comporte, de bas en haut, un moteur 8 entraînant une vis sans fin 9 engagée dans un piston 11 pour le déplacer verticalement le long de l'axe AX, et une structure porteuse 12 entourant le piston 11 et qui porte dans sa partie haute, un éjecteur 13 ainsi qu'une plaque de compression 14 située au dessus de cet éjecteur 13, et un diaphragme 16 couvrant la plaque de compression 14.

Le diaphragme 16 et la plaque de compression 14 s'étendent horizontalement dans la région centrale de la poubelle, et ils peuvent l'un comme l'autre occuper soit une position dans laquelle ils laissent l'ouverture d'admission 7 libre, soit une position dans laquelle ils ferment cette ouverture 7.

La poubelle 1 comporte encore trois sacs distincts portés dans son enceinte en étant régulièrement répartis autour de la colonne centrale 3. Ces sacs s'étendent verticalement entre l'éjecteur 13 qui est en partie haute de la colonne 3, et le moteur 8 qui est situé en partie basse de la colonne 3, et ils sont ouverts vers le haut. Deux de ces trois sacs, repérés par 17 et 18, sont visibles dans la figure 1 qui est une vue en coupe brisée à cent-vingt degrés au niveau de l'axe AX.

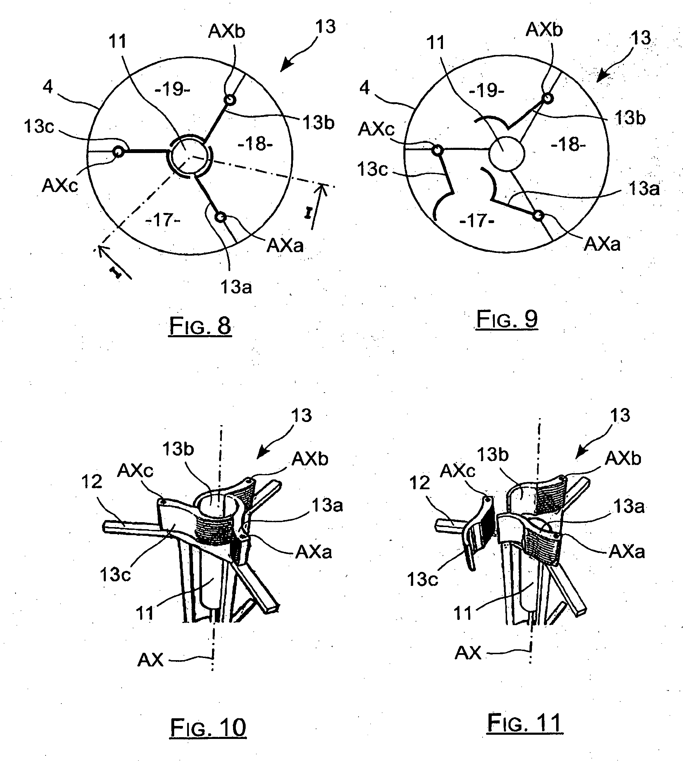

Les vues de dessus des figures 8 et 9 montrent plus clairement les embouchures de ces trois sacs 17, 18, 19, qui partitionnent la section circulaire de la poubelle en trois portions sensiblement identiques s'étendant chacune sur cent-vingt degrés.

Ces trois sacs 17, 18, 19 permettent de diviser la partie supérieure de la poubelle en trois parties, et ils constituent des contenants destinées à recevoir respectivement les bouteilles en plastique, les canettes ou boites, et les gobelets.

La poubelle 1 comporte encore une unité de commande et des moyens motorisés ainsi que des capteurs, non visibles dans les figures, qui permettent de piloter de manière séquencée et automatisée l'ouverture et la fermeture du diaphragme 16, l'ouverture et la fermeture de la plaqué de compression 14, la montée et la descente du piston 11 en pilotant le moteur 8, et enfin l'éjecteur 13 pour qu'il pousse latéralement un récipient situé sur le piston, selon trois directions possibles espacées les unes des autres de cent-vingt degrés autour de l'axe AX.

A l'état initial de la poubelle, le diaphragme 16 et la plaque de compression 14 sont ouverts, et le piston 11 est en position basse le long de l'axe AX, ce qui correspond à la situation de la figure 1.

Dans cette situation, lorsqu'un utilisateur introduit dans l'ouverture 7 un récipient usagé de boisson 21 devant être traité, comme illustré à la figure 2, ce récipient tombe dans la colonne 3 pour se placer sur la face supérieure horizontale du piston 11 en position basse.

La présence de ce récipient sur le piston 11 est alors détectée, par exemple par un capteur optique équipant à cet effet la colonne 3, et qui est relié à l'unité de commande.

L'unité de commande enclenche alors la fermeture du diaphragme 16 pour fermer l'ouverture 7, de manière à protéger les utilisateurs, et elle commande également la fermeture de la plaque de compression 14, ce qui conduit à la situation de la figure 3, en vue de comprimer le récipient à traiter.

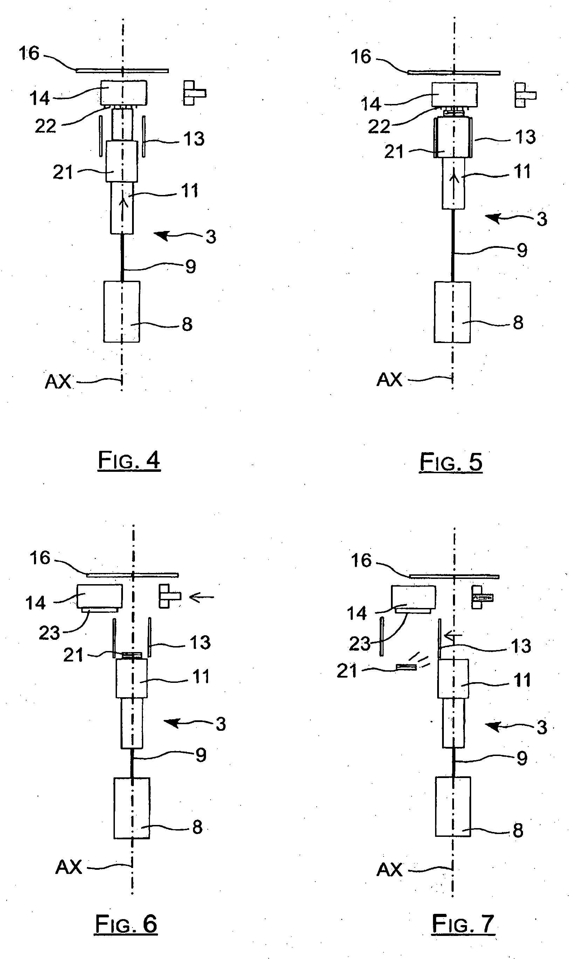

La remontée du piston 11 le long de l'axe AX est alors pilotée par l'unité de commande pour comprimer le récipient, ce qui correspond aux figures 4 et 5. Durant toute cette remontée, les informations issues d'un capteur d'effort et représentatives des efforts subis par le piston 11 sont transférées à l'unité de commande.

Le capteur d'effort utilisé à cet effet peut par exemple se présenter sous forme d'un capteur mesurant la puissance électrique consommée par le moteur tout au long de la remontée, puisque cette puissance est représentative des efforts de exercés par le récipient 21 sur le piston 11 au cours de la remontée.

Durant la compression du récipient 21, le liquide susceptible de se trouver à l'intérieur de ce récipient 21 est expulsé, et il coule le long de la jupe du piston 11, jusqu'au réceptacle inférieur que constitue la base 6 de l'enceinte 2.

Pour faciliter encore l'évacuation du liquide pouvant être contenu dans ce récipient 21, la face inférieure de la plaque de compression 14 est avantageusement pourvue de picots 22 ou de griffes ou de lames tranchantes orientées vers le bas qui permettent de crever la paroi de ce récipient, en particulier au niveau de son bouchon, au fur et à mesure que le piston 11 remonte durant sa compression contre cette plaque 14.

Ces picots, lames ou griffes 22 permettent en particulier de comprimer un récipient fermé, comme par exemple une bouteille en plastique dont le bouchon a été refermé avant introduction dans l'ouverture 7. Dans ce cas, les picots 22 percent le bouchon, pour évacuer l'air et/ou le liquide afin d'autoriser sa compression sans efforts trop élevés.

Complémentairement, la colonne 3 peut être pourvue de griffes latérales, non représentées, qui dépassent vers le centre pour déchirer ou lacérer la paroi latérale du récipient durant sa remontée.

Une fois que le piston 11 a atteint sa hauteur maximale, qui correspond à une certaine distance relativement faible de la plaque de compression 14, comme illustré à la figure 5, le récipient 21 est suffisamment comprimé, de sorte que le piston 11 est alors commandé pour redescendre jusqu'à sa position intermédiaire ou médiane correspondant à la figure 6, c'est-à-dire sa position d'éjection.

A ce titre, la plaque de compression 14 peut être pourvue de plaques 23 coulissant verticalement le long des picots 22, la plaque de compression pouvant alors elle-même être constituée d'une série de plaques verticales empilées les unes contre les autres. Dans ce cas, les plaques 23 sont commandées pour descendre le long des picots 22 de manière à décrocher le récipient dans le cas où il serait resté accroché à ces picots 22. Les picots 22 peuvent aussi, au contraire, avoir des formes conçues pour percer le récipient sans risque de se bloquer dans celui-ci afin de ne pas le retenir lors de la redescente du piston 11.

Lorsque le piston a atteint la position d'éjection, sa face supérieure est située juste au dessous du niveau de éjecteur 13, qui est ici constitué de palettes pouvant tourner autour d'axes verticaux pour pousser le récipient 21 latéralement hors de la colonne centrale 3, ce qui correspond à la situation de la figure 7.

L'éjecteur 13 est conçu pour pouvoir pousser le récipient 21 latéralement selon une direction souhaitée parmi trois possibles, de manière à faire tomber le récipient dans l'un des trois sacs 17, 18, 19 selon que ce récipient est une canette métallique, une bouteille en plastique, ou bien en gobelet en plastique ou en carton.

Le choix du sac 17, 18, 19 vers lequel le récipient 21 est éjecté est déterminé sur la base des efforts subis par le piston 11 durant sa remontée et sa redescente le long de l'axe AX, car l'évolution de ces efforts permet de connaître la hauteur initiale du récipient, son poids initial, sa résistance à sa compression, ainsi que sa hauteur compressée et son poids vide.

Plus concrètement, durant la première phase de la remontée, pendant laquelle le récipient n'est pas encore entré en contact avec la plaque de compression, les efforts subis par le piston 11 sont représentatifs principalement du poids initial de ce récipient avec éventuellement le liquide qu'il contient.

Lorsqu'un saut d'effort apparaît ensuite, il correspond à l'entrée en contact du récipient 21 avec la face inférieure de la plaque de compression 14, ce qui permet de déterminer la hauteur initiale, en déterminant par exemple le temps séparant le début de la remontée du piston et l'apparition du saut d'effort.

Les efforts subis par le piston 11 après ce saut d'effort et jusqu'à la fin de la compression. Par ailleurs, la position haute du piston c'est-à-dire la position qu'il atteint en fin de compression correspond à la position à laquelle le piston s'immobilise une fois que le moteur 8 a développé son couple maximal, et elle permet de la sorte de déterminer la hauteur du récipient comprimé.

Finalement, les efforts subis par le piston 11 durant sa redescente jusqu'à la position d'éjection sont représentatifs du poids à vide du récipient puisqu'il a alors été nécessairement vidé de la majorité de son éventuel contenu.

Comme on le comprend, le fait de connaître, à la fin du cycle, la hauteur initiale du récipient ainsi que son poids initial, sa résistance à la compression, sa hauteur comprimé ainsi que son poids à vide permet dans la majorité des cas de déterminer de manière automatisée, depuis l'unité de commande, si ce récipient est une bouteille en plastique, une cannette métallique ou en aluminium, ou bien un gobelet en matière plastique ou en carton.

En pratique, le tri peut être effectué sur la base d'une vérification de la hauteur initiale du récipient et de sa hauteur comprimée, et de la résistance à la compression qui a été rencontrée lors de la compression.

Complémentairement, le système peut être pourvu, par exemple au niveau de la face supérieure de son piston, d'un circuit électrique pour mesurer la conductivité électrique du récipient, de manière à identifier de façon simple et directe le cas où ce récipient est une canette métallique ou en aluminium.

Par ailleurs, lors de l'évaluation du poids initial du récipient, celui-ci peut être rejeté lorsque le poids en question est trop important, ce qui correspond par exemple à un récipient ne pouvant être traité, tel qu'une bouteille en verre, ou encore à un récipient qui contient une trop grande quantité de liquide pour pouvoir être traité.

Dans ce cas, l'unité de commande peut par exemple piloter la poubelle pour ouvrir le diaphragme 16 et la plaque de compression 14, et remonter le piston 11, de manière à présenter le récipient non traité à l'utilisateur pour qu'il le reprenne.

Comme illustré aux figures 8 à 11, l'éjecteur 13 comporte ici trois palettes repérées par 13a, 13b et 13c, qui sont portées par la structure 12 en étant disposées de telle manière qu'elles entourent conjointement l'espace situé au dessus du piston 11 lorsqu'il occupe sa position intermédiaire d'éjection.

Plus particulièrement, la palette 13a est montée rotative en ayant son extrémité la plus excentrée qui est articulée sur un axe AXa porté par la structure 12 et qui est parallèle à l'axe AX en étant excentré par rapport à celui-ci. L'extrémité opposée de cette palette 13a, c'est-à-dire l'extrémité qui est la plus proche de l'axe AX, a une forme de tiers de cylindre, pour entourer environ un tiers de l'espace situé au dessus du piston 11 lorsque cette palette est au repos comme dans la figure 8.

Les palettes 13b et 13c sont identiques à la palette 13a, et elles sont montées de la même manière sur la structure porteuse 12 pour tourner autour d'axes AXb et AXc excentrés, mais ces trois palettes sont uniformément réparties autour de l'axe AX : elles sont espacées les unes des autres de cent-vingt degrés autour de cet axe.

Ainsi, lorsque ces trois palettes sont au repos, comme dans la figure 8, leurs extrémités centrales en tiers de cylindre entourent conjointement l'espace situé au dessus du piston 11 lorsqu'il est au repos, ce qui correspond à la situation illustrée aux figures 8 et 10.

Lorsque la palette 13a tourne d'environ un tiers de tour autour de son axe AXa, son extrémité centrale se retrouve sensiblement au dessus de l'embouchure du sac 17, de sorte que cette palette permet de pousser latéralement un récipient reposant sur le piston 11 vers l'embouchure du sac 17 afin de faire tomber le récipient dans ce sac.

Chaque palette est apte à tourner autour de l'axe qui la porte, en tournant dans le sens direct ou dans le sens indirect, ces palettes étant par ailleurs déplacées par un système motorisé et à ressorts, non représenté.

Comme illustré aux figures 9 et 11, l'éjection vers le sac 17 d'un récipient reposant sur le piston 11 consiste ainsi à commander d'abord les palettes 13b et 13c pour les faire pivoter d'environ un sixième de tour dans le sens indirect pour qu'elle dégagent deux tiers du pourtour de ce récipient, après quoi la palette 13a est commandée pour tourner d'environ un sixième de tour mais dans le sens direct, ce qui permet de faire tomber le récipient dans le sac 17.

Comme on le comprend, compte tenu de la symétrie de la disposition des trois palettes 13a, 13b, 13c et de leurs cinématiques une séquence analogue permet de pousser un récipient dans le sac 18 en faisant tourner les palettes 13a et 13c dans le sens indirect, puis en faisant tourner la palette 13b dans le sens direct. L'éjection, d'un récipient vers le sac 19 est obtenue en faisant tourner les palettes 13a et 13b dans le sens indirect, puis la palette 13c dans le sens direct.

En fonctionnement, et comme indiqué plus haut, l'unité de commande détermine le type de récipient qui est traité, sur la base du profil des efforts subis par le piston durant sa montée et sa descente, et elle commande ensuite l'éjecteur 13 pour qu'il pilote la séquence de mouvements des palettes appropriée pour éjecter ce récipient vers le sac correspondant à son type.

D'une manière générale, la poubelle peut être dimensionnée pour avoir une hauteur de l'ordre du mètre et un diamètre de l'ordre de cinquante centimètres, et ses composants peuvent être choisis pour aboutir à un temps de cycle de l'ordre de quelques secondes, rendant cette poubelle utilisable en entreprise, dans des bureaux, voire dans un lieu public.

## Revendications

1. Poubelle à boissons (1) comprenant une enceinte (2) présentant une ouverture (7), et renfermant :
- une plaque de compression (14);
- un piston (11) situé sous la plaque de compression (14) en étant mobile en translation selon un axe (AX) entre une position basse, une position d'éjection, et une position haute, dans laquelle il est rapproché de la plaque de compression (14) ;
- une unité de commande associée à des moyens motorisés (8) pour successivement provoquer la remontée du piston (11) vers sa position haute afin de comprimer ce récipient (21) contre la plaque de compression (14), abaisser le piston (11), et éjecter le récipient (21) en le faisant tomber latéralement du piston (11);
- au moins un contenant (17, 18, 19) déporté latéralement par rapport à l'axe de déplacement du piston (11) pour collecter le récipient compressé;
caractérisé eh ce que
- l'ouverture (7) est située sur une portion supérieure (4) de de l'enceinte (2) ;
- la plaque de compression (14) est mobile entre une position dégagée et une position de compression dans laquelle elle ferme l'ouverture (7) ;
- le piston (11) est situé en vis-à-vis de l'ouverture (7) et est rapproché de la plaque de compression (14) lorsqu'elle est fermée dans sa position haute ;
- l'enceinte (2) renferme un éjecteur (13) pour pousser latéralement un récipient (21) reposant sur le piston (11) occupant sa position d'éjection afin de le faire tomber du piston (11) latéralement ;
- l'unité de commande est également associée à des moyens motorisés (8) pour fermer la plaque de compression (14) après introduction d'un récipient (21) dans l'ouverture supérieure (7) et éjecter le récipient (21) en le faisant tomber latéralement du piston (11);
- le contenant (17, 18, 19) est agencée pour collecter le récipient compressé (21) lorsqu'il est éjecté latéralement par l'éjecteur (13).

2. Poubelle selon la revendication 1, comportant des moyens d'identification du type du récipient (21) traité, plusieurs contenants (17, 18, 19) répartis autour de l'axe (AX) de déplacement du piston (11), l'éjecteur (13) apte à pousser un récipient (21) reposant sur le piston (11) sélectivement vers l'un ou l'autre des contenants (17, 18, 19), et dans lequel l'unité de commande pilote l'éjecteur (13) pour qu'il pousse le récipient (21) vers un contenant (17, 1, 19) choisi sur la base du type de récipient (21) reconnu par les moyens d'identification.

3. Poubelle selon la revendication 2, dans laquelle les moyens d'identification du type de récipient (21) comportent un capteur des efforts subis par le piston (11) durant sa montée et sa descente, et des moyens d'analyse de l'évolution de ces efforts pour déterminer la hauteur initiale du récipient (21) et/ou son poids initial et/ou sa résistance à la compression et/ou sa hauteur une fois compressé et/ou son poids une fois compressé.

4. Poubelle selon l'une des revendications précédentes, dans laquelle l'éjecteur (13) comporte plusieurs palettes (13a, 13b, 13c) orientées sensiblement radialement par rapport à l'axe (AX) de déplacement du piston (11) en étant régulièrement réparties autour de cet axe (AX), chaque palette (13a, 13b, 13c) étant montée rotative par l'une de ses extrémités portée par un axe (AXa, AXb, AXc) excentré par rapport à l'axe (AX) de déplacement du piston (11) et parallèle à cet axe (AX), et une extrémité formant poussoir rapprochée de l'axe (AX) de déplacement du piston (11), les extrémités formant poussoir des différentes palettes (13a, 13b, 13c) étant agencées pour entourer conjointement l'espace situé au dessus du piston (11) en position d'éjection lorsque l'éjecteur (13) est au repos, et dans lequel une éjection d'un récipient (21) selon une direction orthogonale à une palette donnée (13a, 13b, 13c) est obtenue en faisant tourner les deux autres palettes dans un sens qui écarte leurs extrémités de l'axe (AX) de coulissement du piston (11), puis en faisant tourner la palette donnée (13a, 13b, 13c) en sens opposé.

5. Poubelle selon la revendication 4, comportant trois contenants distincts (17, 18, 19) uniformément répartis autour de l'axe (AX) de déplacement du piston (11), et dans laquelle l'éjecteur (13) comporte trois palettes (13a, 13b, 13c) régulièrement réparties autour de l'axe (AX) de déplacement du piston (11).

6. Poubelle selon l'une des revendications précédentes, dans laquelle la plaque de compression (14) comporte à sa face inférieure des picots ou lames coupantes (22) pour percer le récipient (21) lorsqu'il est comprimé contre cette planque (14) par le piston (11) remontant vers sa position haute.

## Patentansprüche

1. Mülleimer (1) für Getränke, umfassend eine Einfassung (2), die eine Öffnung (7) aufweist, und enthaltend:
- eine Kompressionsplatte (14);
- einen Kolben (11), der sich unter der Kompressionsplatte (14) befindet und dabei entlang einer Achse (AX) zwischen einer unteren Position, einer Auswurfposition und einer oberen Position, in der er an die Kompressionsplatte (14) angenähert ist, translationsbeweglich ist;
- eine Steuereinheit, die mit motorisierten Mitteln (8) verbunden ist, um nacheinander die Aufwärtsbewegung des Kolbens (11) in seine obere Position zwecks Drücken dieses Behälters (21) gegen die Kompressionsplatte (14) zu bewirken, den Kolben (11) abzusenken und den Behälter (21) auszuwerfen, indem man ihn seitlich von dem Kolben (11) herunterfallen lässt;
- mindestens ein Behältnis (17, 18, 19), das relativ zur Verschiebungsachse des Kolbens (11) seitlich versetzt ist, um den zusammengepressten Behälter aufzufangen;
**dadurch gekennzeichnet, dass**
- sich die Öffnung (7) an einem oberen Abschnitt (4) der Einfassung (2) in dem zentralen Bereich ihres oberen Teils befindet;
- die Kompressionsplatte (14) zwischen einer ausgerückten Position und einer Kompressionsposition beweglich ist, in der sie die Öffnung (7) verschließt;
- sich der Kolben (11) gegenüber der Öffnung (7) befindet und an die Kompressionsplatte (14) angenähert ist, wenn sie in ihrer oberen Position verschlossen ist;
- die Einfassung (2) einen Auswerfer (13) umfasst, um einen Behälter (21), der auf dem seine Auswurfposition einnehmenden Kolben (11) steht, seitlich zu verschieben, um ihn seitlich von dem Kolben (11) herunterfallen zu lassen;
- die Steuereinheit ferner mit motorisierten Mitteln (8) verbunden ist, um die Kompressionsplatte (14) nach dem Einführen eines Behälters (21) in die obere Öffnung (7) zu verschließen und den Behälter (21) auszuwerfen, indem man ihn seitlich von dem Kolben (11) herunterfallen lässt;
- das Behältnis (17, 18, 19) so ausgebildet ist, dass es den zusammengepressten Behälter (21) auffängt, wenn er von dem Auswerfer (13) seitlich ausgeworfen wird.

2. Mülleimer nach Anspruch 1, umfassend Mittel zur Identifizierung der Art des verarbeiteten Behälters (21), mehrere Behältnisse (17, 18, 19), die um die Verschiebungsachse (AX) des Kolbens (11) herum verteilt sind, den Auswerfer (13), der dazu geeignet ist, einen auf dem Kolben (11) stehenden Behälter (21) selektiv zu dem einen oder dem anderen der Behältnisse (17, 18, 19) zu schieben, und wobei die Steuereinheit den Auswerfer (13) steuert, damit er den Behälter (21) zu einem Behältnis (17, 1, 19) schiebt, das auf der Basis der von den Identifizierungsmittel erkannten Art des Behälters (21) ausgewählt wird.

3. Mülleimer nach Anspruch 2, wobei die Mittel zur Identifizierung der Art des Behälters (21) einen Sensor zum Erfassen der Kräfte umfassen, die von dem Kolben (11) während seiner Aufwärtsbewegung und seiner Abwärtsbewegung erfahren werden, sowie Analysemittel zur Analyse der Entwicklung dieser Kräfte, um die Anfangshöhe des Behälters (21) und/oder sein Anfangsgewicht und/oder seine Kompressionsfestigkeit und/oder seine Höhe nach dem Zusammenpressen und/oder sein Gewicht nach dem Zusammenpressen zu bestimmen.

4. Mülleimer nach einem der vorhergehenden Ansprüche, wobei der Auswerfer (13) mehrere Schaufeln (13a, 13b, 13c) umfasst, die im Wesentlichen radial zur Verschiebungsachse (AX) des Kolbens (11) ausgerichtet und dabei gleichmäßig um diese Achse (AX) herum verteilt sind, wobei jede Schaufel (13a, 13b, 13c) über eines ihrer Enden, das von einer Achse (AXa, AXb, AXc) getragen wird, die relativ zur Verschiebungsachse (AX) des Kolbens (11) exzentrisch und parallel zu dieser Achse (AX) ist, drehend gelagert ist, und ein an die Verschiebungsachse (AX) des Kolbens (11) angenähertes, einen Stößel bildendes Ende, wobei die Stößel bildenden Enden der verschiedenen Schaufeln (13a, 13b, 13c) so ausgebildet sind, dass sie gemeinsam den Raum umgeben, der sich über dem in Auswurfposition befindlichen Kolben (11) befindet, wenn der Auswerfer (13) im Ruhezustand ist, und wobei ein Auswurf eines Behälters (21) in eine zu einer gegebenen Schaufel (13a, 13b, 13c) orthogonale Richtung erreicht wird, indem die beiden anderen Schaufeln in eine Richtung gedreht werden, die ihre Enden von der Verschiebungsachse (AX) des Kolbens (11) entfernt und dann die gegebene Schaufel (13a, 13b, 13c) in die entgegengesetzte Richtung gedreht wird.

5. Mülleimer nach Anspruch 4, umfassend drei verschiedene Behältnisse (17, 18, 19), die gleichmäßig um die Verschiebungsachse (AX) des Kolbens (11) herum verteilt sind, und wobei der Auswerfer (13) drei Schaufeln (13a, 13b, 13c) umfasst, die gleichmäßig um die Verschiebungsachse (AX) des Kolbens (11) herum verteilt sind.

6. Mülleimer nach einem der vorhergehenden Ansprüche, wobei die Kompressionsplatte (14) an ihrer Unterseite Zacken oder Schneidklingen (22) umfasst, um den Behälter (21) zu durchstechen, wenn er von dem sich in seine obere Position aufwärtsbewegenden Kolben (11) gegen diese Platte (14) gedrückt wird.

## Claims

1. A beverage garbage can (1) comprising an enclosure (2) presenting an opening (7) and containing:
• a compression plate (14);
• a piston (11) situated below the compression plate (14), the piston being mounted to move in translation along an axis (AX) between a low position, an ejection position, and a high position in which it is close to the compression plate (14) ;
• a control unit associated with motor means (8) for successively causing the piston (11) to rise towards its high position so as to compress the container (21) against the compression plate (14), to cause the piston (11) to be lowered to the ejection position, and to cause the container (21) to be ejected by making it drop sideways off the piston (11);
• at least one receptacle (17, 18, 19) offset sideways relative to the travel axis of the piston (11) in order to collect the compressed container (21
**characterized in that**
• the opening (7) is situated on a top portion (4) of the enclosure (2);
• the compression plate (14) is movable between a disengaged position and a compression position in which it closes the opening (7);
• the piston (11) is situated facing the opening (7) and is close to the compression plate (14) when it is closed in its high position;
• the enclosure (2) contains an ejector (13) for pushing a container (21) resting on the piston (11) while in its ejection position in a sideways direction so as to cause the container to drop sideways off the piston (11);
• the control unit is also associated with motor means (8) for causing the compression plate (14) to close after a container (21) has been inserted into the top opening (7), and to cause the container (21) to be ejected by making it drop sideways off the piston (11);
• the receptacle (17, 18, 19) is arranged to collect the compressed container when it is ejected sideways by the ejector (13).

2. A garbage can according to claim 1, including identification means for identifying the type of container (21) being processed, a plurality of receptacles (17, 18, 19) distributed around the travel axis (AX) of the piston (11), an ejector (13) suitable for pushing a container (21) resting on the piston (11) selectively to one or another of the receptacles (17, 18, 19), and wherein the control unit controls the ejector (13) to cause it to push the container (21) towards a receptacle (17, 18, 19) that has been selected on the basis of the type of container (21) recognized by the identification means.

3. A garbage can according to claim 2, wherein the identification means for identifying the type of container (21) comprise a sensor for sensing the forces to which the piston (11) is subjected while it is rising and moving back down, and means for analyzing variation in these forces in order to determine the initial height of the container (21) and/or its initial weight and/or its compression strength and/or its height once compressed and/or its weight once compressed.

4. A garbage can according to any preceding claim, wherein the ejector (13) comprises a plurality of paddles (13a, 13b, 13c) extending substantially radially relative to the travel axis (AX) of the piston (11) and regularly distributed around this axis (AX), each paddle (13a, 13b, 13c) being pivotally mounted at one of its ends carried by an axis (AXa, AXb, AXc) that is off-center relative to the travel axis (AX) of the piston (11) and parallel to this axis (AX), and having another end forming a pusher that is closer to the travel axis (AX) of the piston (11), the pusher-forming ends of the various paddles (13a, 13b, 13c) being arranged so that together they surround the space situated above the piston (11) in the ejection position when the ejector (13) is at rest, and wherein a container (21) is ejected in a direction orthogonal to a given paddle (13a, 13b, 13c) by causing the other two paddles to cause their ends to move away from the travel axis (AX) of the piston (11), and then causing the given paddle (13a, 13b, 13c) to turn in the opposite direction.

5. A garbage can according got claim 4, having three distinct receptacles (17, 18, 19) uniformly distributed around the travel axis (AX) of the piston (11), and wherein the ejector (13) has three paddles (13a, 13b, 13c) regularly distributed around the travel axis (AX) of the piston (11).

6. A garbage can according to any preceding claim, wherein the compression plate (14) has spikes or sharp blades (22) on its bottom face to pierce the container (21) while it is being compressed against the plate (14) by the piston (11) rising towards its high position.
